# EUROPÄISCHE PATENTSCHRIFT

(11) **EP 3 794 725 B1**
(45) Veröffentlichungstag und Bekanntmachung des Hinweises auf die Patenterteilung: **30.11.2022**
(21) Anmeldenummer: 18726141.7
(22) Anmeldetag: 18.05.2018
(51) Int. Cl.: H02P 29/68

(54) **VERFAHREN ZUM BETRIEB EINER ELEKTRISCHEN MASCHINE**
METHOD FOR OPERATING AN ELECTRICAL MACHINE
PROCÉDÉ PERMETTANT DE FAIRE FONCTIONNER UN MOTEUR ÉLECTRIQUE

(43) Veröffentlichungstag der Anmeldung: 24.03.2021
(73) Patentinhaber: GKN AUTOMOTIVE LTD., Birmingham Business Park Birmingham West Midlands B37 7YE (GB)
(72) Erfinder: GEMASSMER, Tobias, 53225 Bonn (DE); CORDERO, Enrique, 98178 Seattle WA. (US); SONTHEIM, Florian, 53844 Troisdorf (DE); FITZ, Rudolf, 53844 Troisdorf (DE)
(74) Vertreter: karo IP
(86) Internationale Anmeldenummer: PCT/EP2018/063188
(87) Internationale Veröffentlichungsnummer: WO 2019/219214

(56) Entgegenhaltungen:
- WO-A1-2017/099655
- DE-A1-102007 014 346
- DE-A1-102007 035 825
- DE-A1-102013 203 661

## Beschreibung

Die vorliegende Erfindung betrifft ein Verfahren zum Betrieb einer elektrischen Maschine, wobei die elektrische Maschine insbesondere in einem Kraftfahrzeug eingesetzt wird, bevorzugt zum Antrieb des Kraftfahrzeugs.

In Kraftfahrzeugen werden regelmäßig elektrische Maschinen, z. B. als Traktionsantriebe, eingesetzt, die von Wechselrichtern mit elektrischer Energie versorgt werden. Während des Betriebs der elektrischen Maschine kommt es aufgrund der elektrischen Verluste im Wechselrichter sowie der elektrischen und mechanischen Verluste in der elektrischen Maschine zur Erwärmung dieser Komponenten. Im Fall einer starken Temperaturzunahme muss die erwärmte Komponente vor thermischer Zerstörung geschützt werden. Dies erfolgt durch eine Reduzierung der auf die elektrische Maschine übertragenen elektrischen Leistung ("*Derating*") und der damit verbundenen Reduzierung der entstehenden Verlustleistung.

Zur Reduzierung der Auswirkung des thermischen "*Derating*" auf die Betriebsstrategie des Kraftfahrzeuges wäre es wünschenswert, eine mögliche Reduzierung der elektrischen Leistung zeitlich vorherzusagen. Die Verlustleistung hängt jedoch von zahlreichen Faktoren und Parametern ab (z. B. Motorparameter, Sättigungseigenschaften, Halbleitereigenschaften, Temperatur, Drehmoment, Drehzahl, Zwischenkreisspannung, Regelungsstrategie, Alterung, etc.). Die Berechnung einer thermisch maximal möglichen Leistung, bestehend aus Drehmoment und Drehzahl, lässt sich somit nur schwierig bzw. analytisch nicht bestimmen.

Aus der WO 2017/099655 A1 ist ein Verfahren zur Steuerung eines Drehmoments einer elektrischen Maschine bekannt.

Die DE 10 2007 035825 A1 betrifft eine elektrische Einrichtung mit einem Leistungshalbleiter und Mitteln für den Schutz des Leistungshalbleiters vor thermischer Überlastung.

Die DE 10 2013 203661 A1 betrifft ein Verfahren zum Betreiben eines Kraftfahrzeugs mit einem elektrischen Bordnetz, das wenigstens einen Halbleiterschalter aufweist, der während des Betriebs des Kraftfahrzeugs aufgrund eines belastungsbeeinflussenden Faktors mit Belastungsereignissen belastet wird und für welchen eine Lebensdauer-Belastungsbeziehung vorgegeben wird.

Die DE 10 2007 014346 A1 betrifft ein Gerät mit elektromotorischem Antrieb, umfassend einen Elektromotor und eine elektronische Baugruppe zur Ansteuerung des Elektromotors.

Aufgabe der Erfindung ist es daher, die mit Bezug auf den Stand der Technik vorhandenen Probleme zumindest teilweise zu lösen. Insbesondere soll ein Verfahren bereitgestellt werden, durch das eine möglicherweise erforderliche Reduzierung der elektrischen Leistung zeitlich vorhergesagt werden kann.

Diese Aufgaben werden gelöst mit einem Verfahren gemäß den Merkmalen des Patentanspruchs 1. Weitere vorteilhafte Ausgestaltungen des Verfahrens und der Erfindung sind in den weiteren Patentansprüchen angegeben. Es ist darauf hinzuweisen, dass die in den Patentansprüchen einzeln aufgeführten Merkmale in technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zum Betrieb einer elektrischen Maschine bei, wobei durch das Verfahren ein Wert eines von der elektrischen Maschine in einem zukünftigen (also in der Zukunft liegenden) (zeitlichen) Intervall maximal bereitstellbaren ersten Drehmoments berechnet wird. Durch eine Begrenzung des in dem Intervall bereitgestellten Drehmoments auf den Wert kann eine Überhitzung zumindest eines zur Übertragung der elektrischen Leistung erforderlichen mindestens einen Halbleiters durch eine (bei Betrieb der elektrischen Maschine zur Erzeugung dieses Drehmoment anfallende) Verlustleistung verhindert werden (und/oder eine drohende Überhitzung und das Einsetzen eines Deratings prognostiziert und damit verhindert werden). Das Verfahren umfasst zumindest die folgenden Schritte:
a) Feststellen von elektrischen Parametern (z. B. eine Drehzahl der elektrischen Maschine, eine elektrische Spannung), mit denen die elektrische Maschine zu einem aktuellen Zeitpunkt (also jetzt) betrieben wird;
b) Berechnen eines bei diesen Parametern maximal erzeugbaren zweiten Drehmoments der elektrischen Maschine;
c) Berechnen einer elektrischen Verlustleistung, die an dem mindestens einen Halbleiter bei Aufprägung des maximal erzeugbaren zweiten Drehmoments entstehen würde;
d) Berechnen einer resultierenden ersten Temperatur einer Halbleitersperrschicht des mindestens einen Halbleiters, die sich durch die während des Intervalls vorliegende elektrische Verlustleistung ergeben würde; (und, wenn die resultierende erste Temperatur höher ist als eine maximal zulässige zweite Temperatur)
e) iteratives Durchführen der Schritte b) bis d) mit immer kleineren Werten des maximal erzeugbaren zweiten Drehmoments nach Schritt b) bis die berechnete resultierende erste Temperatur nach Schritt d) höchstens einer maximal zulässigen zweiten Temperatur der Halbleitersperrschicht entspricht und dann
f) Betreiben der elektrischen Maschine in dem Intervall mit einem Drehmoment, das höchstens den durch das Verfahren ermittelten Wert aufweist oder, wenn die elektrische Maschine mit einem höheren Drehmoment betrieben wird, verkürzen des Intervalls und betreiben der elektrischen Maschine mit dem höheren Drehmoment (nur) während des verkürzten Intervalls.

Eine Berechnung der sich ergebenden Temperaturen für einen bestimmten Betriebspunkt der elektrischen Maschine (bestehend z. B. aus Drehmoment, Drehzahl und elektrischer Spannung) lässt sich insbesondere in Kenntnis der Eigenschaften der eingesetzten Halbleiter durchführen. Daher wird hier ein Regelkreis vorgeschlagen, durch den nur rechnerisch ein Drehmoment in ggf. einem oder in mehreren Iterationsschritten bestimmt wird, dass dann (nach Durchführung des Verfahrens) zum Betrieb der elektrischen Maschine in dem (jetzt beginnenden Intervall) höchstens verwendet werden kann (ohne das eine unzulässige Überhitzung der Komponenten erfolgt).

Der Regelkreis bildet insbesondere die Schritte a) bis e) und zumindest die Schritte c) bis e) ab. Die Parameter (z. B. Drehzahl und Spannung) können als Eingangsgrößen für den Regelkreis genutzt werden. Auch das bei diesen Parametern mögliche zweite Drehmoment kann z. B. durch eine Steuereinheit bestimmt werden und als Eingangsgröße für den Regelkreis genutzt werden.

Das während der Schritte b) bis e) (ggf. sukzessiv) ermittelte bzw. berechnete zweite Drehmoment wird vor Erreichen des Schrittes f) insbesondere nicht physisch durch die elektrische Maschine erzeugt, sondern nur für die Berechnung des dann in Schritt f) ermittelten Werts verwendet. Alternativ ist möglich, dass das jeweils durch das Differenzdrehmoment reduzierte zweite Drehmoment physisch durch die elektrische Maschine erzeugt wird (und dann mit jedem folgenden Iterationsschritt weiter reduziert wird).

Insbesondere werden also die Schritte a) bis f) in der beschriebenen Reihenfolge nacheinander, ggf. auch zeitlich zumindest teilweise parallel, durchgeführt. Dabei werden die Schritte c) bis e), insbesondere nach einem einmaligen Durchführen der Schritte a) und b), wiederholt in der beschriebenen Reihenfolge durchgeführt. Der Schritt f) wird dann nach den Schritten a) bis e) (ggf. als Abschluss) des Verfahrens durchgeführt.

Das Verfahren selber wird insbesondere dauerhaft während des Betriebs der elektrischen Maschine bzw. des Kraftfahrzeuges durchgeführt. Insbesondere wird das Verfahren nur dann durchgeführt, wenn eine Überhitzung der elektrischen Maschine oder der Komponenten zu erwarten ist.

Die elektrischen Parameter in Schritt a) umfassen insbesondere (zumindest oder ausschließlich) eine aktuelle Drehzahl der elektrischen Maschine und eine aktuelle elektrische Spannung, die zum Betrieb der elektrischen Maschine vorliegt.

Der Regelkreis umfasst zur Durchführung des Schrittes c) mindestens ein Berechnungsmodell, wobei als Eingangsgrößen die Parameter (z. B. Drehzahl und Spannung) und das berechnete zweite Drehmoment genutzt werden. Das Berechnungsmodell erzeugt als Ergebnis die für diese Eingangsgrößen vorliegende Verlustleistung.

In dem Berechnungsmodell werden insbesondere die Eigenschaften der elektrischen Maschine und der Komponenten (die zur Bereitstellung und Übertragung der elektrischen Energie hin zur elektrischen Maschine erforderlich sind, also z. B. Motorparameter, Sättigungseigenschaften, Halbleitereigenschaften, Temperatur, Alterung, etc.) sowie eine Regelungsstrategie für die elektrische Maschine und die Komponenten berücksichtigt.

In Schritt d) kann eine Kühlleistung, die zur Kühlung des mindestens einen Halbleiters verfügbar ist, berücksichtigt werden.

Insbesondere umfasst der Regelkreis ein Temperaturmodell zur Bestimmung der ersten Temperatur. Als Eingangsgrößen für das Temperaturmodell können insbesondere ein Kühlfluidmassenstrom und eine Kühlfluidtemperatur sowie die gemäß Schritt c) berechnete Verlustleistung genutzt werden.

Insbesondere wird in Schritt e) eine Differenz von der berechneten resultierenden ersten Temperatur und der maximal zulässigen zweiten Temperatur gebildet und anhand dieser Differenz über einen Regler ein Differenzdrehmoment deltaT bestimmt. Das Differenzdrehmoment deltaT kann in der folgenden Iteration in Schritt b) von dem (berechneten) maximal erzeugbaren zweiten Drehmoment Tₙ (mit n = 1, 2, 3, ...) der vorhergehenden Iteration subtrahiert werden zur Berechnung eines maximal erzeugbaren zweiten Drehmoments Tₙ₊₁ für die unmittelbar folgenden Schritte c) bis d).

Bevorzugt ist der Regler ein I-Regler (Integral-Regler) oder ein PI-Regler (Proportional-Integral-Regler).

In einer bevorzugten Ausgestaltung wird die elektrische Maschine mit einem mehrphasigen (bevorzugt dreiphasigen) Wechselstrom eines Wechselrichters betrieben, der eine (bekannte) Schaltfrequenz aufweist. Die in Schritt a) festgestellten Parameter können zumindest eine Zwischenkreisspannung des Wechselrichters als eine aktuelle elektrische Spannung umfassen. In einem auf Schritt b) folgenden Schritt b1) werden zumindest die folgenden weiteren elektrischen Parameter bestimmt:
- Strangstrom jeder Phase des Wechselstroms;
- Strangspannung jeder Phase des Wechselstroms;
- Leistungsfaktor und/oder cos Phi.

Als Leistungsfaktor (auch: Wirkleistungsfaktor) bezeichnet man in der Elektrotechnik insbesondere das Verhältnis vom Betrag der Wirkleistung P zur Scheinleistung S. Der cos Phi ist der Phasenverschiebungswinkel der Grundschwingungen von Strom und Spannung. Cos Phi kann insbesondere genauere Werte liefern als der Leistungsfaktor, allerdings ist hierfür ggf. eine höhere Rechenleistung erforderlich.

Der Regelkreis, insbesondere der zur Durchführung des Verfahrens gemäß der bevorzugten Ausgestaltung geeignete Regelkreis, umfasst zur Durchführung der Schritte c) mindestens ein Berechnungsmodell mit einem ersten Teilmodell und einem zweiten Teilmodell. In dem ersten Teilmodell werden als Eingangsgrößen die Parameter (z. B. Drehzahl und Zwischenkreisspannung) und das berechnete zweite Drehmoment genutzt.

In dem ersten Teilmodell werden insbesondere die Eigenschaften der elektrischen Maschine und der Komponenten (die zur Bereitstellung und Übertragung der elektrischen Energie hin zur elektrischen Maschine erforderlich sind, also z. B. Motorparameter, Sättigungseigenschaften, Halbleitereigenschaften, Temperatur, Alterung, etc.) sowie eine Regelungsstrategie für die elektrische Maschine und die Komponenten berücksichtigt.

Als Ergebnisse des ersten Teilmodells ergeben sich die Strangströme jeder Phase des Wechselstroms, die Strangspannung jeder Phase des Wechselstroms sowie der Leistungsfaktor bzw. der cos Phi.

In dem zweiten Teilmodell werden als Eingangsgrößen insbesondere die Ergebnisse des ersten Teilmodells als auch die Parameter Zwischenkreisspannung und Schaltfrequenz genutzt. In dem zweiten Teilmodell wird basierend auf diesen Eingangsgrößen die gemäß Schritt c) berechnete Verlustleistung bestimmt.

Insbesondere werden in Schritt c) Eigenschaften (z. B. Motorparameter, Sättigungseigenschaften, Halbleitereigenschaften, Temperatur, Alterung, etc.) und eine Regelstrategie der elektrischen Maschine und der Komponenten (die zur Bereitstellung und Übertragung der elektrischen Energie hin zur elektrischen Maschine erforderlich sind) berücksichtigt.

Heute genutzte elektrische Traktionsantriebe sind insbesondere Permanentmagnet-Synchronmaschinen mit Reluktanz. Das bedeutet, dass ein gewünschtes Drehmoment nicht eindeutig einem elektrischen Strom zugeordnet werden kann, sondern zusätzlich die Phasenlage des Stroms das Drehmoment beeinflusst. Der dadurch entstehende Freiheitsgrad in der Wahl von Stromamplitude und Phasenlage des Stroms wird auf verschiedene Weise genutzt, um z. B. die Effizienz der elektrischen Maschine zu erhöhen, eine gewünschte Regelreserve einzuhalten, oder ähnliches.

Die Wahl von Stromamplitude und Phasenlage des Stroms hat insbesondere unmittelbar Einfluss auf die Verluste in Umrichter (Wechselrichter) und elektrischer Maschine, deswegen sollte sie auch in der Bestimmung/Abschätzung der Temperaturen berücksichtigt werden.

Dabei sind die Eigenschaften Motorparameter, Sättigungseigenschaften, Halbleitereigenschaften, Temperatur, Alterung, insbesondere in der genannten Reihenfolge, zu berücksichtigen. Die Motorparameter der elektrischen Maschine einschließlich der Sättigung sind z. B. unabdingbar, um elektrische Ströme, elektrische Spannungen und cos_Phi sowie ein gewünschtes Drehmoment zu ermitteln (abhängig von besagter Regelstrategie). Die Halbleitereigenschaften werden für das Temperaturmodell benötigt. Dabei können sie im einfachsten Fall als linear abhängig von Phasenstrom und DC-Spannung angenommen werden. Die Halbleitereigenschaften können dann beliebig genau und komplex hinterlegt werden: als analytische, aber nicht mehr linear abhängige Funktion von elektrischem Strom und elektrischer Spannung; unter Einbeziehung der Halbleitertemperaturen; unter Einbeziehung der Alterung; unter Einbeziehung der Variation über einzelne Bauteile hinweg; als Kombination von mehreren der genannten Punkte.

Im Übrigen ist neben der Regelstrategie insbesondere auch das Modulationsverfahren ausschlaggebend für die elektrischen Verluste, zum Beispiel im Unterschied zwischen kontinuierlichen und diskontinuierlichen Verfahren. Die Art der Modulation kann ebenfalls im Thermomodell berücksichtigt werden, kann aber auch Einfluss auf die Wahl von Stromamplitude und Phasenlage des Stroms haben.

Insbesondere umfasst das Intervall eine Dauer von höchstens 10 Sekunden, bevorzugt von höchstens 7 Sekunden.

Insbesondere umfasst das Intervall eine Dauer von mindestens 0,5 Sekunden, bevorzugt von mindestens 2 Sekunden

Insbesondere wird die Dauer des Intervalls in Abhängigkeit von einem Betriebspunkt der elektrischen Maschine oder einer Betriebsart z. B. des Kraftfahrzeuges bestimmt. Insbesondere kann die Dauer des Intervalls während des Betriebs der elektrischen Maschine variiert werden. Insbesondere kann das Intervall auch in Abhängigkeit von dem tatsächlich aufgeprägten Drehmoment (während oder unmittelbar nach dem Verfahren) verkürzt werden, wenn das tatsächlich aufgeprägte Drehmoment den durch das Verfahren bestimmten Wert übersteigt.

Insbesondere ist die elektrische Maschine eine erste Antriebseinheit eines Kraftfahrzeuges. Wenn eine Drehmomentanforderung zum Antrieb des Kraftfahrzeuges den durch das Verfahren nach Schritt f) ermittelten Wert des Drehmoments in dem Intervall übersteigt, kann zumindest eine zweite Antriebseinheit des Kraftfahrzeuges (z. B. eine Verbrennungskraftmaschine oder ähnliches) zur Erhöhung des bereitgestellten Drehmoments zugeschaltet werden.

Das Intervall kann insbesondere auch unter Berücksichtigung des zuschaltbaren Einsatzes einer weiteren Antriebseinheit bestimmt werden.

Es wird weiter eine elektrische Antriebsanordnung vorgeschlagen, zumindest umfassend eine elektrische Maschine und eine Energiequelle (z. B. eine Batterie und/oder ein Wechselrichter, der zwischen elektrischer Maschine und Batterie angeordnet ist) sowie mindestens einen Halbleiter, über den eine zum Betrieb der elektrischen Maschine benötigte elektrische Energie der Energiequelle zuführbar ist. Die elektrische Antriebsanordnung kann eine Steuereinheit aufweisen, die einen Prozessor umfasst, der zur Durchführung des beschriebenen Verfahrens geeignet ausgeführt und/oder konfiguriert ist. Die Steuereinheit kann das Verfahren also ausführen bzw. führt es im Betrieb des Kraftfahrzeuges aus.

Insbesondere greift die Steuereinheit auf einen Regelkreis zu und/oder ist ein Regelkreis in der Steuereinheit integriert.

Mit dem Regelkreis wird nur rechnerisch das Drehmoment in ggf. einem oder in mehreren Iterationsschritten bestimmt, dass dann (nach Durchführung des Verfahrens) zum Betrieb der elektrischen Maschine in dem (jetzt beginnenden, ggf. verkürzten) Intervall und während des Intervalls dauerhaft höchstens verwendet werden kann (ohne das eine unzulässige Überhitzung der Komponenten erfolgt).

Der Regelkreis bildet insbesondere die Schritte a) bis e) (insbesondere auch Schritt b1)) und zumindest die Schritte c) bis e) des Verfahrens ab. Die Parameter (z. B. Drehzahl und Spannung, ggf. auch Schaltfrequenz, Kühlfluidmassenstrom und Kühlfluidtemperatur) können als Eingangsgrößen für den Regelkreis genutzt werden. Auch das bei diesen Parametern mögliche zweite Drehmoment kann z. B. durch die Steuereinheit bestimmt werden und als Eingangsgröße für den Regelkreis genutzt werden.

Es wird weiter ein Kraftfahrzeug vorgeschlagen, zumindest aufweisend die elektrische Antriebsanordnung, wobei das Kraftfahrzeug (zumindest) über die elektrische Maschine der Antriebsanordnung antreibbar ist.

Die Ausführungen zu dem Verfahren gelten gleichermaßen für die Antriebsanordnung und das Kraftfahrzeug und umgekehrt.

Weiter kann das Verfahren auch von einem Computer bzw. mit einem Prozessor einer Steuereinheit (des Kraftfahrzeuges) ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens ausführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte des vorgeschlagenen Verfahrens auszuführen.

Die Ausführungen zu dem Verfahren sind auf das computerimplementierte Verfahren übertragbar und umgekehrt.

Vorsorglich sei angemerkt, dass die hier verwendeten Zahlwörter ("erste", "zweite", "dritte", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Es zeigen schematisch:
- Fig. 1:: eine Darstellung einer ersten Ausführungsvariante eines Regelkreises;
- Fig. 2:: eine Darstellung einer zweiten Ausführungsvariante eines Regelkreises;
- Fig. 3:: eine erste Darstellung der Wirkung des Verfahrens;
- Fig. 4:: eine zweite Darstellung der Wirkung des Verfahrens;
- Fig. 5:: eine dritte Darstellung der Wirkung des Verfahrens; und
- Fig. 6:: ein Kraftfahrzeug.

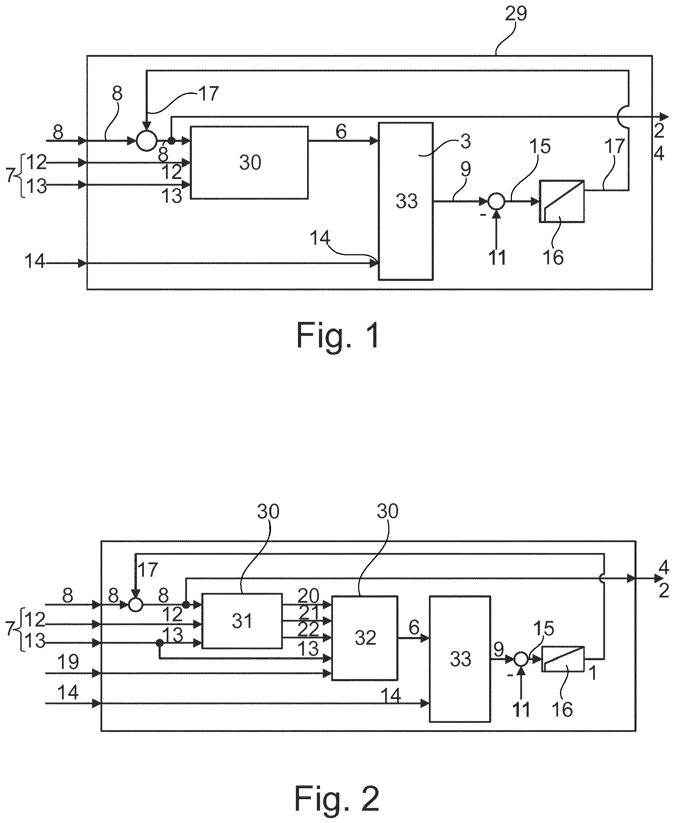

Fig. 1 zeigt eine Darstellung einer ersten Ausführungsvariante eines Regelkreises 29. In Schritt a) werden elektrische Parameter 7 festgestellt bzw. ausgelesen (hier eine Drehzahl 12 und eine elektrische Spannung 13), mit denen die elektrische Maschine 1 zu einem aktuellen Zeitpunkt (also jetzt) betrieben wird. In Schritt b) wird ein bei diesen Parametern 7 maximal erzeugbares zweites Drehmoment 8 der elektrischen Maschine 1 berechnet und zunächst als Eingangsgröße verwendet. In Schritt c) wird eine elektrische Verlustleistung 6, die an dem mindestens einen Halbleiter 5 bei Aufprägung des maximal erzeugbaren zweiten Drehmoments 8 entstehen würde, berechnet. Die Berechnung erfolgt in einem Berechnungsmodell 30, wobei als Eingangsgrößen die Parameter 7 (also Drehzahl 12 und Spannung 13) und das berechnete zweite Drehmoment 8 genutzt werden. Das Berechnungsmodell 30 erzeugt als Ergebnis die für diese Eingangsgrößen vorliegende Verlustleistung 6.

In Schritt d) wird eine resultierende erste Temperatur 9 einer Halbleitersperrschicht 10 des mindestens einen Halbleiters 5 berechnet, die sich durch die während des Intervalls 3 vorliegende elektrische Verlustleistung 6 ergeben würde. In Schritt d) kann eine Kühlleistung 14, die zur Kühlung des mindestens einen Halbleiters 5 verfügbar ist, berücksichtigt werden.

Der Regelkreis 29 umfasst ein Temperaturmodell 33 zur Bestimmung der ersten Temperatur 9. Als Eingangsgrößen für das Temperaturmodell 33 werden ein Kühlfluidmassenstrom und eine Kühlfluidtemperatur (hier zusammengefasst als Kühlleistung 14) sowie die gemäß Schritt c) berechnete Verlustleistung 6 genutzt.

Gemäß Schritt e) erfolgt ein iteratives Durchführen der Schritte b) bis d) mit immer kleineren Werten 2 des maximal erzeugbaren zweiten Drehmoments 8 nach Schritt b) bis die berechnete resultierende erste Temperatur 9 nach Schritt d) höchstens einer maximal zulässigen zweiten Temperatur 11 der Halbleitersperrschicht 10 entspricht.

In Schritt e) wird eine Differenz 15 von der berechneten resultierenden ersten Temperatur 9 und der maximal zulässigen zweiten Temperatur 11 gebildet und anhand dieser Differenz 15 über einen Regler 16 ein Differenzdrehmoment 17 bestimmt. Das Differenzdrehmoment 17 kann in der folgenden Iteration in Schritt b) von dem (berechneten) maximal erzeugbaren zweiten Drehmoment 8 Tₙ (mit n = 1, 2, 3, ...) der vorhergehenden Iteration subtrahiert werden zur Berechnung eines maximal erzeugbaren zweiten Drehmoments 8 Tₙ₊₁ für die unmittelbar folgenden Schritte c) bis d).

Entspricht die berechnete resultierende erste Temperatur 9 nach Schritt d) höchstens einer maximal zulässigen zweiten Temperatur 11 der Halbleitersperrschicht 10 wird Schritt f) durchgeführt. Gemäß Schritt f) erfolgt ein Betreiben der elektrischen Maschine 1 in dem Intervall 3 mit einem Drehmoment, das höchstens den durch das Verfahren ermittelten Wert 2 aufweist (ggf. kann, wenn eine übergeordnete Regelung ein größeres Drehmoment anfordert, das Intervall dann entsprechend verkürzt werden).

Das während der Schritte b) bis e) (ggf. sukzessiv) ermittelte bzw. berechnete zweite Drehmoment 8 wird vor Erreichen des Schrittes f) gerade nicht physisch durch die elektrische Maschine 1 erzeugt, sondern nur für die Berechnung des dann in Schritt f) ermittelten Werts 2 verwendet.

Die Schritte a) bis f) werden in der beschriebenen Reihenfolge nacheinander, ggf. auch zeitlich zumindest teilweise parallel, durchgeführt. Dabei werden die Schritte c) bis e), insbesondere nach einem einmaligen Durchführen der Schritte a) und b), wiederholt in der beschriebenen Reihenfolge durchgeführt. Der Schritt f) wird dann nach den Schritten a) bis e), ggf. als Abschluss des Verfahrens, durchgeführt.

Fig. 2 zeigt eine Darstellung einer zweiten Ausführungsvariante eines Regelkreises 29. Auf die Ausführungen zu Fig. 1 wird verwiesen. Diese besonders bevorzugte Ausführungsvariante bezieht sich auf eine elektrische Maschine 1, die mit einem mehrphasigen (bevorzugt dreiphasigen) Wechselstrom eines Wechselrichters 18 betrieben wird, der eine (bekannte) Schaltfrequenz 19 aufweist. Die in Schritt a) festgestellten Parameter 7 weisen eine Zwischenkreisspannung des Wechselrichters 18 als eine aktuelle elektrische Spannung 13 auf. In einem auf Schritt b) folgenden Schritt b1) werden zumindest die folgenden weiteren elektrischen Parameter 7 bestimmt:
- Strangstrom 20 jeder Phase des Wechselstroms;
- Strangspannung 21 jeder Phase des Wechselstroms;
- Leistungsfaktor 22.

Der Regelkreis 29 zur Durchführung des Verfahrens gemäß der bevorzugten Ausgestaltung umfasst zur Durchführung des Schrittes c) ein Berechnungsmodell 30 mit einem ersten Teilmodell 31 und einem zweiten Teilmodell 32. In dem ersten Teilmodell 31 werden als Eingangsgrößen die Parameter 7 (Drehzahl 12 und Zwischenkreisspannung als Spannung 13) und das berechnete zweite Drehmoment 8 genutzt.

In dem ersten Teilmodell 31 werden die Eigenschaften (z. B. Motorparameter, Sättigungseigenschaften, Halbleitereigenschaften, Temperatur, Alterung, etc.) der elektrischen Maschine 1 und der Komponenten (die zur Bereitstellung und Übertragung der elektrischen Energie hin zur elektrischen Maschine 1 erforderlich sind, also z. B. Wechselrichter 18, Halbleiter 5, usw.) sowie eine Regelungsstrategie für die elektrische Maschine 1 und die Komponenten berücksichtigt.

Als Ergebnisse des ersten Teilmodells 31 ergeben sich die Strangströme 20 jeder Phase des Wechselstroms, die Strangspannung 21 jeder Phase des Wechselstroms sowie der Leistungsfaktor 22.

In dem zweiten Teilmodell 32 werden als Eingangsgrößen die Ergebnisse des ersten Teilmodells 31 als auch die Parameter Zwischenkreisspannung als Spannung 13 und Schaltfrequenz 19 genutzt. In dem zweiten Teilmodell 32 wird basierend auf diesen Eingangsgrößen die gemäß Schritt c) berechnete Verlustleistung 6 bestimmt.

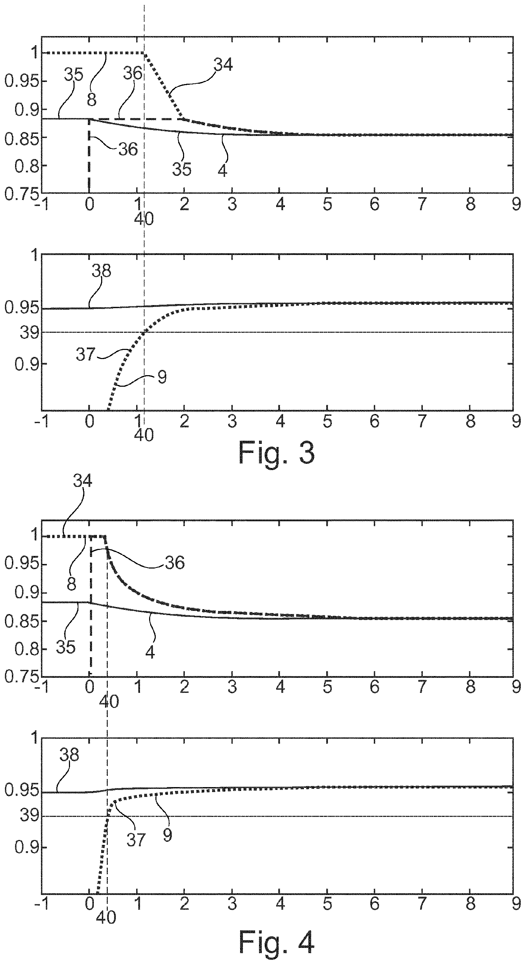

Fig. 3 bis 5 zeigen mehrere Darstellungen der Wirkung des Verfahrens. In dem jeweils oberen Diagramm ist auf der vertikalen Achse das Drehmoment 4, 8 aufgetragen. Dabei ist das Drehmoment 4, 8 jeweils normiert dargestellt. In dem jeweils unteren Diagramm ist auf der vertikalen Achse die Temperatur aufgetragen. Auch die Temperatur ist jeweils normiert dargestellt. In beiden Diagrammen jeder Fig. ist auf der horizontalen Achse die Zeit 28 aufgetragen.

Fig. 3 zeigt die Verläufe des Drehmoments 4, 8 und der Temperatur, wenn das Intervall 3 eine Länge von zwei Sekunden aufweist. In dem oberen Diagramm ist das bei den aktuell vorliegenden Parametern 7 maximal erzeugbare zweite Drehmoment 8 dargestellt (erster Verlauf 34). Weiter zeigt der zweite Verlauf 35 das berechnete Drehmoment mit dem (variierenden) Wert 2, das während eines Intervall 3 von zwei Sekunden Länge ohne Überhitzung der Halbleiter 5 bereitgestellt werden könnte. Der dritte Verlauf 36 zeigt das tatsächlich angelegte Drehmoment, dass in einem zeitlichen Abstand, der dem Intervall entspricht (zwei Sekunden Länge), dem zweiten Verlauf 35 nachfolgt. In dem unteren Diagramm zeigt der vierte Verlauf 37 die (aktuelle) Temperatur der Halbleiter 5 bzw. der Halbleitersperrschicht 10, die aus dem angelegten Drehmoment (gemäß dem dritten Verlauf 36) resultiert. Der fünfte Verlauf 38 zeigt die sich bei Anlegen des Drehmoments gemäß dem zweiten Verlauf 35 einstellende Temperatur der Halbleitersperrschicht 10, die unter Berücksichtigung des Intervalls von zwei Sekunden Länge eingehalten werden muss. Wenn die aktuelle Temperatur gemäß dem vierten Verlauf 37 eine bestimmte dritte Temperatur 39 erreicht, wird ab einem ersten Zeitpunkt 40 ein Derating eingeleitet, das eine Reduzierung der maximal auf die elektrische Maschine übertragbaren elektrischen Leistung und eine damit verbundene Reduzierung der entstehenden Verlustleistung umfasst (siehe erster Verlauf 34). Das Derating führt dazu, dass die Parameter, bzw. der elektrische Strom bzw. das Drehmoment begrenzt werden, so dass das maximal erzeugbare zweite Drehmoment 8 (erster Verlauf 34) ab dem ersten Zeitpunkt 40 sukzessive verringert wird.

Der dritte Verlauf 36 entspricht zu einem Zeitpunkt höchstens dem ersten Verlauf 34. Durch das Verfahren wird ein Wert 2 eines maximal bereitstellbaren ersten Drehmoments 4 ermittelt, durch das eine Überhitzung (und damit ein überraschendes Derating) vermieden werden kann. Dabei wird sichergestellt, dass die berechnete resultierende erste Temperatur 9 unterhalb der maximal zulässigen zweiten Temperatur 11 der Halbleitersperrschicht 10 bleibt.

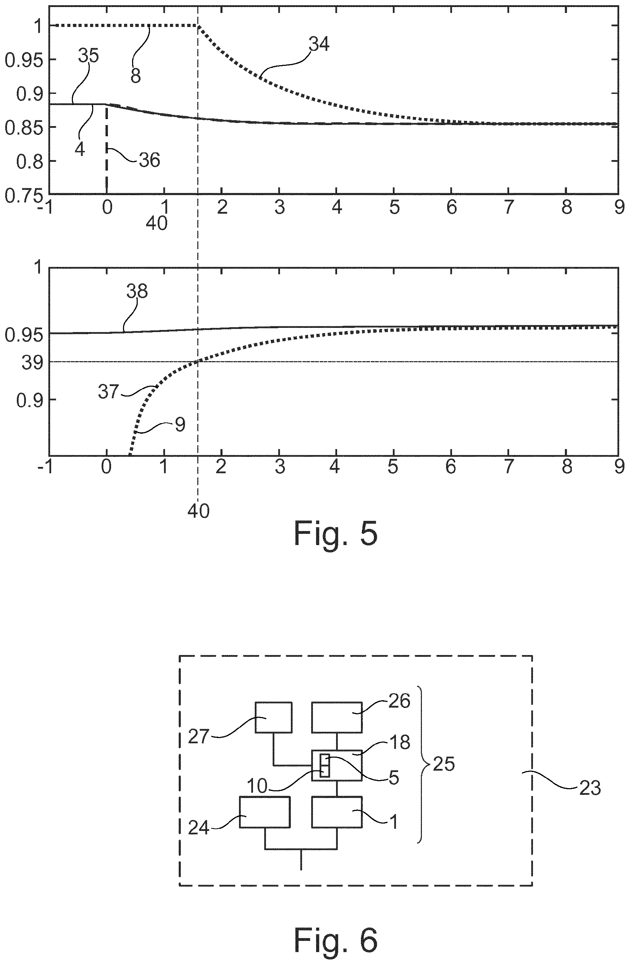

Fig. 4 zeigt die Verläufe des Drehmoments 4, 8 und der Temperatur, wenn das Intervall 3 eine Länge von zwei Sekunden aufweist. In dem oberen Diagramm ist das bei den aktuell vorliegenden Parametern 7 maximal erzeugbare zweite Drehmoment 8 dargestellt (erster Verlauf 34). Weiter zeigt der zweite Verlauf 35 das berechnete Drehmoment mit dem (variierendem) Wert 2, das während eines Intervall 3 von zwei Sekunden Länge ohne Überhitzung der Halbleiter 5 (und ohne überraschend eingeleitetes Derating) bereitgestellt werden könnte. Der dritte Verlauf 36 zeigt das tatsächlich angelegte Drehmoment, dass hier direkt auf das maximal erzeugbare zweite Drehmoment 8 angehoben wird. In dem unteren Diagramm zeigt der vierte Verlauf 37 die (aktuelle) Temperatur der Halbleiter 5 bzw. der Halbleitersperrschicht 10, die aus dem angelegten Drehmoment (gemäß dem dritten Verlauf 36) resultiert. Der fünfte Verlauf 38 zeigt die sich bei Anlegen des Drehmoments gemäß dem zweiten Verlauf 35 einstellende Temperatur der Halbleitersperrschicht 10, die unter Berücksichtigung des Intervalls von zwei Sekunden Länge eingehalten werden muss. Wenn die aktuelle Temperatur gemäß dem vierten Verlauf 37 eine bestimmte dritte Temperatur 39 erreicht, wird ab einem ersten Zeitpunkt 40 ein Derating eingeleitet, das eine Reduzierung der maximal auf die elektrische Maschine übertragbaren elektrischen Leistung und eine damit verbundene Reduzierung der entstehenden Verlustleistung umfasst (siehe erster Verlauf 34). Das Derating führt dazu, dass die Parameter 7 bzw. der elektrische Strom bzw. das Drehmomentbegrenzt werden, so dass das maximal erzeugbare zweite Drehmoment 8 (erster Verlauf 34) ab dem ersten Zeitpunkt 40 sukzessive verringert wird. Erkennbar ist, dass der erste Zeitpunkt 40 (Start Derating) aufgrund der schneller steigenden Temperatur gemäß dem vierten Verlauf 37 deutlich früher eintritt als in den Fig. 3 und 5 dargestellt.

Der dritte Verlauf 36 entspricht zu einem Zeitpunkt höchstens dem ersten Verlauf 34. Durch das Verfahren wird ein Wert 2 eines maximal bereitstellbaren ersten Drehmoments 4 ermittelt, durch das eine Überhitzung vermieden werden kann. Dabei wird sichergestellt, dass die berechnete resultierende erste Temperatur 9 (bzw. die bei Anlegen des aktuellen Drehmoments gemäß dem dritten Verlauf 36 resultierende Temperatur) unterhalb der maximal zulässigen zweiten Temperatur 11 der Halbleitersperrschicht 10 bleibt.

Fig. 5 zeigt die Verläufe des Drehmoments 4, 8 und der Temperatur, wenn das Intervall 3 eine Länge von zwei Sekunden aufweist. In dem oberen Diagramm ist das bei den aktuell vorliegenden Parametern 7 maximal erzeugbare zweite Drehmoment 8 dargestellt (erster Verlauf 34). Weiter zeigt der zweite Verlauf 35 das berechnete Drehmoment mit dem (variierenden) Wert 2, das während eines Intervall 3 von zwei Sekunden Länge ohne Überhitzung der Halbleiter 5 bereitgestellt werden könnte. Der dritte Verlauf 36 zeigt das tatsächlich angelegte Drehmoment, dass hier dem zweiten Verlauf 35 unmittelbar folgt. In dem unteren Diagramm zeigt der vierte Verlauf 37 die (aktuelle) Temperatur der Halbleiter 5 bzw. der Halbleitersperrschicht 10, die aus dem angelegten Drehmoment (gemäß dem dritten Verlauf 36) resultiert. Der fünfte Verlauf 38 zeigt die sich bei Anlegen des Drehmoments gemäß dem zweiten Verlauf 35 einstellende Temperatur der Halbleitersperrschicht 10, die unter Berücksichtigung des Intervalls von zwei Sekunden Länge eingehalten werden muss. Wenn die aktuelle Temperatur gemäß dem vierten Verlauf 37 eine bestimmte dritte Temperatur 39 erreicht, wird ab einem ersten Zeitpunkt 40 ein Derating eingeleitet, das eine Reduzierung der maximal auf die elektrische Maschine übertragbaren elektrischen Leistung und eine damit verbundene Reduzierung der entstehenden Verlustleistung umfasst. Das Derating führt dazu, dass die Parameter 7 bzw. der elektrische Strom bzw. das Drehmoment begrenzt werden, so dass das maximal erzeugbare zweite Drehmoment 8 (erster Verlauf 34) ab dem ersten Zeitpunkt 40 sukzessive verringert wird. Erkennbar ist, dass das Derating hier zeitlich später einsetzt als in Fig. 3 dargestellt.

Der dritte Verlauf 36 entspricht zu einem Zeitpunkt höchstens dem ersten Verlauf 34. Durch das Verfahren wird ein Wert 2 eines maximal bereitstellbaren ersten Drehmoments 4 ermittelt, durch das eine Überhitzung vermieden werden kann. Dabei wird sichergestellt, dass die berechnete resultierende erste Temperatur 9 (bzw. die bei Anlegen des aktuellen Drehmoments gemäß dem dritten Verlauf 36 resultierende Temperatur) unterhalb der maximal zulässigen zweiten Temperatur 11 der Halbleitersperrschicht 10 bleibt.

Fig. 6 zeigt ein Kraftfahrzeug 23. Das Kraftfahrzeug 23 umfasst eine elektrische Antriebsanordnung 25, die eine elektrische Maschine 1, eine Energiequelle 26 (z. B. eine Batterie) und einen Wechselrichter 18, der zwischen elektrischer Maschine 1 und Batterie angeordnet ist, sowie einen Halbleiter 5 umfasst. Über den Halbleiter 5 ist eine zum Betrieb der elektrischen Maschine 1 benötigte elektrische Energie der Energiequelle 26 zuführbar. Die elektrische Antriebsanordnung 25 weist eine Steuereinheit 27 auf, die zur Durchführung des beschriebenen Verfahrens geeignet ausgeführt und/oder eingerichtet ist. Das Kraftfahrzeug 23 weist zudem eine weitere Antriebseinheit 24 auf (z. B. eine Verbrennungskraftmaschine oder ähnliches), die zur Erhöhung oder zum Ersatz des von der elektrischen Maschine 1 bereitgestellten Drehmoments zugeschaltet werden kann.

### Bezugszeichenliste

- 1: Maschine
- 2: Wert
- 3: Intervall [Sekunde]
- 4: erstes Drehmoment [Newtonmeter]
- 5: Halbleiter
- 6: Verlustleistung [Watt]
- 7: Parameter
- 8: zweites Drehmoment [Newtonmeter]
- 9: erste Temperatur [Kelvin]
- 10: Halbleitersperrschicht
- 11: zweite Temperatur [Kelvin]
- 12: Drehzahl [Umdrehungen/ Minute]
- 13: Spannung [Volt]
- 14: Kühlleistung [Watt]
- 15: Differenz [Kelvin]
- 16: Regler
- 17: Differenzdrehmoment [Newtonmeter]
- 18: Wechselrichter
- 19: Schaltfrequenz [Hertz]
- 20: Strangstrom [Ampere]
- 21: Strangspannung [Volt]
- 22: Leistungsfaktor
- 23: Kraftfahrzeug
- 24: Antriebseinheit
- 25: Antriebsanordnung
- 26: Energiequelle
- 27: Steuereinheit
- 28: Zeit
- 29: Regelkreis
- 30: Berechnungsmodell
- 31: erstes Teilmodell
- 32: zweites Teilmodell
- 33: Temperaturmodell
- 34: erster Verlauf
- 35: zweiter Verlauf
- 36: dritter Verlauf
- 37: vierter Verlauf
- 38: fünfter Verlauf
- 39: dritte Temperatur
- 40: erster Zeitpunkt

## Patentansprüche

1. Verfahren zum Betrieb einer elektrischen Maschine (1), wobei durch das Verfahren ein Wert (2) eines von der elektrischen Maschine (1) in einem zukünftigen Intervall (3) maximal bereitstellbaren ersten Drehmoments (4) berechnet wird, wobei durch eine Begrenzung des in dem Intervall (3) bereitgestellten Drehmoments auf den Wert (2) eine Überhitzung zumindest eines zur Übertragung der elektrischen Leistung erforderlichen mindestens einen Halbleiters (5) durch eine Verlustleistung (6) verhindert wird; wobei das Verfahren zumindest die folgenden Schritte umfasst:
a) Feststellen von elektrischen Parametern (7), mit denen die elektrische Maschine (1) zu einem aktuellen Zeitpunkt betrieben wird;
b) Berechnen eines bei diesen Parametern (7) maximal erzeugbaren zweiten Drehmoments (8) der elektrischen Maschine (1);
**dadurch gekennzeichnet, dass** das Verfahren zusätzlich zumindest die folgenden Schritte umfasst:
c) Berechnen einer elektrischen Verlustleistung (6), die an dem mindestens einen Halbleiter (5) bei Aufprägung des maximal erzeugbaren zweiten Drehmoments (8) entstehen würde;
d) Berechnen einer resultierenden ersten Temperatur (9) einer Halbleitersperrschicht (10) des mindestens einen Halbleiters (5), die sich durch die während des Intervalls (3) vorliegende elektrische Verlustleistung (6) ergeben würde;
e) iteratives Durchführen der Schritte b) bis d) mit immer kleineren Werten (2) des maximal erzeugbaren zweiten Drehmoments (8) nach Schritt b) bis die berechnete resultierende erste Temperatur (9) nach Schritt d) höchstens einer maximal zulässigen zweiten Temperatur (11) der Halbleitersperrschicht (10) entspricht und dann
f) Betreiben der elektrischen Maschine (1) in dem Intervall (3) mit einem Drehmoment, das höchstens den durch das Verfahren ermittelten Wert (2) aufweist oder, wenn die elektrische Maschine (1) mit einem höheren Drehmoment betrieben wird, verkürzen des Intervalls (3) und betreiben der elektrischen Maschine (1) mit dem höheren Drehmoment während des verkürzten Intervalls (3).

2. Verfahren nach Patentanspruch 1, wobei die elektrischen Parameter (7) in Schritt a) eine aktuelle Drehzahl (12) der elektrischen Maschine (1) und eine aktuelle elektrische Spannung (13), die zum Betrieb der elektrischen Maschine (1) vorliegt, umfassen.

3. Verfahren nach einem der vorhergehenden Patentansprüche, wobei in Schritt d) eine Kühlleistung (14), die zur Kühlung des mindestens einen Halbleiters (5) verfügbar ist, berücksichtigt wird.

4. Verfahren nach einem der vorhergehenden Patentansprüche, wobei in Schritt e) eine Differenz (15) von der berechneten resultierenden ersten Temperatur (9) und der maximal zulässigen zweiten Temperatur (11) gebildet und anhand dieser Differenz (15) über einen Regler (16) ein Differenzdrehmoment (17) bestimmt wird, das in der folgenden Iteration in Schritt b) von dem maximal erzeugbaren zweiten Drehmoment (8) der vorhergehenden Iteration subtrahiert wird zur Berechnung eines maximal erzeugbaren zweiten Drehmoments (8) für die unmittelbar folgenden Schritte c) bis d).

5. Verfahren nach Patentanspruch 5, wobei der Regler (16) ein I-Regler oder ein PI-Regler ist.

6. Verfahren nach einem der vorhergehenden Patentansprüche, wobei die elektrische Maschine (1) mit einem mehrphasigen Wechselstrom eines Wechselrichters (18) betrieben wird, der eine Schaltfrequenz (19) aufweist; wobei die in Schritt a) festgestellten Parameter (7) zumindest eine Zwischenkreisspannung des Wechselrichters (18) als eine aktuelle elektrische Spannung (13) umfassen; wobei in einem auf Schritt b) folgenden Schritt b1) zumindest die folgenden weiteren elektrischen Parameter (7) bestimmt werden:
• Strangstrom (20) jeder Phase des Wechselstroms;
• Strangspannung (21) jeder Phase des Wechselstroms;
• Leistungsfaktor (21).

7. Verfahren nach einem der vorhergehenden Patentansprüche, wobei in Schritt c) Eigenschaften der elektrischen Maschine (1) und eine Regelstrategie der elektrischen Maschine (1) berücksichtigt werden.

8. Verfahren nach einem der vorhergehenden Patentansprüche, wobei das Intervall (3) eine Dauer von höchstens 10 Sekunden umfasst.

9. Verfahren nach einem der vorhergehenden Patentansprüche, wobei das Intervall (3) eine Dauer von mindestens 0,5 Sekunden umfasst.

10. Verfahren nach einem der vorhergehenden Patentansprüche, wobei die elektrische Maschine (1) eine erste Antriebseinheit eines Kraftfahrzeuges (23) ist; wobei, wenn eine Drehmomentanforderung zum Antrieb des Kraftfahrzeuges (23) den durch das Verfahren nach Schritt f) ermittelten Wert (2) des Drehmoment in dem Intervall (3) übersteigt, zumindest eine zweite Antriebseinheit (24) des Kraftfahrzeuges (23) zur Erhöhung des bereitgestellten Drehmoments zugeschaltet wird.

11. Elektrische Antriebsanordnung (25), zumindest umfassend eine elektrische Maschine (1) und eine Energiequelle (26) sowie mindestens einen Halbleiter (5), über den eine zum Betrieb der elektrischen Maschine (1) benötigte elektrische Energie der Energiequelle (26) zuführbar ist, wobei die elektrische Antriebsanordnung (25) eine Steuereinheit (27) aufweist, die einen Prozessor umfasst, der zur Durchführung eines Verfahrens nach einem der vorhergehenden Patentansprüche konfiguriert ist.

12. Kraftfahrzeug (22), zumindest aufweisend eine elektrische Antriebsanordnung (25) nach Anspruch 11, wobei das Kraftfahrzeug (23) über die elektrische Maschine (1) der Antriebsanordnung (25) antreibbar ist.

## Claims

1. Method for the operation of an electric machine (1) wherein, through the method, a value (2) of a maximum initial torque (4) that can be provided by the electric machine (1) in a future interval (3) is calculated, wherein by limiting the torque provided in the interval (3) to the value (2), an overheating of at least one of the at least one semiconductors (5) required for transmission of the electrical power resulting from a power loss (6) is prevented; wherein the method comprises at least the following steps:
a) ascertaining electrical parameters (7) with which the electric machine (1) is being operated at a current time point;
b) calculating a maximum second torque (8) that can be generated by the electric machine (1) at these parameters (7);
**characterized in that** the method in addition comprises the following steps:
c) calculating an electrical power loss (6) that would arise at the at least one semiconductor (5) if the maximum second torque (8) that can be generated is applied;
d) calculating a resulting first temperature (9) of a semiconductor junction layer (10) of the at least one semiconductor (5) that would result from the electrical power loss (6) present during the interval (3);
e) iterative performance of steps b) to d) with smaller and smaller values (2) of the maximum second torque (8) that can be generated according to step b) until the resulting first temperature (9) that is calculated in accordance with step d) corresponds at most to a maximum permissible second temperature (11) of the semiconductor junction layer (10), and then
f) operating the electric machine (1) in the interval (3) with a torque whose value (2) is at most that ascertained by the method or, if the electric machine (1) is operated with a higher torque, shortening the interval (3) and operating the electric machine (1) with the higher torque during the shortened interval (3).

2. Method as claimed in claim 1, wherein the electrical parameters (7) in step a) comprise a current rotation speed (12) of the electric machine (1) and a current electrical voltage (13) that is present for operation of the electric machine (1).

3. Method as claimed in one of the preceding claims, wherein a cooling power (14) that is available for cooling the at least one semiconductor (5) is taken into consideration in step d).

4. Method as claimed in one of the preceding claims, wherein a difference (15) between the calculated resulting first temperature (9) and the maximum permissible second temperature (11) is formed in step e), and a difference torque (17) is determined by a controller (16) with reference to this difference (15), which is subtracted in the following iteration in step b) from the maximum second torque (8) that can be generated of the preceding iteration in order to calculate a maximum second torque (8) that can be generated for the immediately following steps c) to d).

5. Method as claimed in claim 5, wherein the controller (16) is an I-controller or a PI-controller.

6. Method as claimed in one of the preceding claims, wherein the electric machine (1) is operated with a multiphase alternating current of an inverter (18) which has a switching frequency (19); wherein the parameters (7) ascertained in step a) comprise at least an intermediate circuit voltage of the inverter (18) as a current electrical voltage (13); wherein, in a step b1) that follows step b), at least the following further electrical parameters (7) are determined:
• line current (20) of each phase of the alternating current;
• line voltage (21) of each phase of the alternating current;
• power factor (21).

7. Method as claimed in one of the preceding claims, wherein properties of the electric machine (1) and a control strategy of the electric machine (1) are taken into consideration in step c).

8. Method as claimed in one of the preceding claims, wherein the interval (3) has a duration of at most 10 seconds.

9. Method as claimed in one of the preceding claims, wherein the interval (3) has a duration of at least 0.5 seconds.

10. Method as claimed in one of the preceding claims, wherein the electric machine (1) is a first drive unit of a motor vehicle (23); wherein when a requested torque for drive of the motor vehicle (23) exceeds the value (2) of the torque in the interval (3) ascertained by the method in accordance with step f), at least one second drive unit (24) of the motor vehicle (23) is switched on to increase the torque provided.

11. Electric drive arrangement (25) comprising at least an electric machine (1) and an energy source (26) as well as at least one semiconductor (5), via which the electrical energy of the energy source (26) can be supplied for operation of the electric machine (1), wherein the electric drive arrangement (25) comprises a control unit (27) that comprises a processor, that is configured for carrying out a method as claimed in one of the preceding claims.

12. Motor vehicle (22) comprising at least one electric drive arrangement (25) as claimed in claim 11, wherein the motor vehicle (23) can be driven by the electric machine (1) of the drive arrangement (25).

## Revendications

1. Procédé permettant de faire fonctionner une machine électrique (1), dans lequel le procédé permet de calculer une valeur (2) d'un premier couple (4) pouvant être fourni au maximum par la machine électrique (1) dans un intervalle futur (3), dans lequel une limitation du couple fourni dans l'intervalle (3) à la valeur (2) permet d'empêcher par une dissipation de puissance (6) une surchauffe d'au moins un semi-conducteur (5) nécessaire à la transmission de la puissance électrique ; le procédé comprenant au moins les étapes suivantes consistant à :
a) constater des paramètres électriques (7) avec lesquels la machine électrique (1) fonctionne à un instant actuel ;
b) calculer un deuxième couple (8) de la machine électrique (1) pouvant être généré au maximum pour ces paramètres (7) ;
**caractérisé en ce que** le procédé comprend en outre au moins les étapes suivantes consistant à :
c) calculer une dissipation de puissance électrique (6) qui se produirait au niveau du au moins un semi-conducteur (5) si le deuxième couple (8) pouvant être généré au maximum était appliqué ;
d) calculer une première température résultante (9) d'une couche de barrière de semi-conducteur (10) du au moins un semi-conducteur (5) qui résulterait de la dissipation de puissance électrique (6) présente pendant l'intervalle (3) ;
e) exécuter par itérations les étapes b) à d) avec des valeurs (2) de plus en plus petites pour le deuxième couple (8) pouvant être généré au maximum selon l'étape b) jusqu'à ce que la première température résultante (9) calculée selon l'étape d) corresponde au plus à une deuxième température (11) admissible au maximum de la couche de barrière de semi-conducteur (10), et ensuite
f) faire fonctionner la machine électrique (1) dans l'intervalle (3) avec un couple qui présente au plus la valeur (2) établie par le procédé, ou bien, si la machine électrique (1) fonctionne avec un couple plus élevé, abréger l'intervalle (3) et faire fonctionner la machine électrique (1) avec le couple plus élevé pendant l'intervalle abrégé (3).

2. Procédé selon la revendication 1, dans lequel les paramètres électriques (7) à l'étape a) comprennent une vitesse de rotation actuelle (12) de la machine électrique (1) et une tension électrique actuelle (13) qui est présente pour faire fonctionner la machine électrique (1).

3. Procédé selon l'une quelconque des revendications précédentes, dans lequel, à l'étape d), une puissance de refroidissement (14) qui est disponible pour le refroidissement du au moins un semi-conducteur (5) est prise en compte.

4. Procédé selon l'une quelconque des revendications précédentes, dans lequel, à l'étape e), une différence (15) de la première température résultante (9) calculée et de la deuxième température (11) admissible au maximum est formée, et à l'aide de cette différence (15), par le biais d'un régulateur (16), un couple différentiel (17) est déterminé qui est dans l'itération suivante à l'étape b) soustraite du deuxième couple (8) pouvant être généré au maximum de l'itération précédente afin de calculer un deuxième couple (8) pouvant être généré au maximum pour les étapes c) à d) immédiatement suivantes.

5. Procédé selon la revendication 5, dans lequel le régulateur (16) est un régulateur I ou un régulateur PI.

6. Procédé selon l'une quelconque des revendications précédentes, dans lequel la machine électrique (1) fonctionne avec un courant alternatif polyphasé d'un onduleur (18) qui présente une fréquence de commutation (19) ; dans lequel les paramètres (7) constatés à l'étape a) comprennent au moins une tension de circuit intermédiaire de l'onduleur (18) comme une tension électrique actuelle (13) ; dans lequel, dans une étape b1) suivant l'étape b), au moins les paramètres électriques supplémentaires suivants (7) sont déterminés :
• le courant de phase (20) de chaque phase du courant alternatif ;
• la tension de phase (21) de chaque phase du courant alternatif ;
• le facteur de puissance (21).

7. Procédé selon l'une quelconque des revendications précédentes, dans lequel à l'étape c), des propriétés de la machine électrique (1) et une stratégie de régulation de la machine électrique (1) sont prises en compte.

8. Procédé selon l'une quelconque des revendications précédentes, dans lequel l'intervalle (3) comprend une durée d'au plus 10 secondes.

9. Procédé selon l'une quelconque des revendications précédentes, dans lequel l'intervalle (3) comprend une durée d'au moins 0,5 seconde.

10. Procédé selon l'une quelconque des revendications précédentes, dans lequel la machine électrique (1) est une première unité d'entraînement d'un véhicule automobile (23) ; dans lequel, lorsqu'une demande couple pour l'entraînement du véhicule automobile (23) dépasse la valeur (2) du couple dans l'intervalle (3), établie par le procédé selon l'étape f), au moins une deuxième unité d'entraînement (24) du véhicule automobile (23) est mise en circuit pour augmenter le couple fourni.

11. Système d'entraînement électrique (25), comprenant au moins une machine électrique (1) et une source d'énergie (26) ainsi qu'au moins un semi-conducteur (5) par l'intermédiaire duquel l'énergie électrique nécessaire au fonctionnement de la machine électrique (1) peut être amenée à la source d'énergie (26), le système d'entraînement électrique (25) comprenant une unité de commande (27) qui comprend un processeur qui est configuré pour exécuter un procédé selon l'une quelconque des revendications précédentes.

12. Véhicule automobile (22), présentant au moins un système d'entraînement électrique (25) selon la revendication 11, le véhicule automobile (23) pouvant être entraîné par la machine électrique (1) du système d'entraînement (25).
